# EUROPEAN PATENT APPLICATION

(11) **EP 1 248 462 A1**
(43) Date of publication of application: **09.10.2002**
(21) Application number: 00987684.8
(22) Date of filing: 21.12.2000
(51) Int. Cl.: H04N 7/173

(54) **TRANSMISSION APPARATUS USING CATV NETWORK**

(30) Priority: 06.01.2000 JP 2000005805
(71) Applicant: Yugen Kaisha LS Net, Chiba-ken 279-0013 (JP)
(72) Inventor: SAWADA, Akemi, Yugen Kaisha LS Net, Urayasu-shi, Chiba 279-0013 (JP)
(74) Representative: Goddar, Heinz J., Dr.
(86) International application number: JP0009086
(87) International publication number: WO01050756

(57) **Abstract**

The head end 201 at CATV center 200 and the transmission path 300 form a LAN. The host device 202 for transferring content information and the host device 101 at the subscriber site 100 are connected to the transmission path 300. A plurality of content information streams are transferred using a broadcast technique from the host device 202 onto the upstream path 301. The host device 101 at the subscriber site 100 receives the streams transferred through the downstream path 302. Each of the streams is assigned with a socket using a destination port number. The host device 101 receives in real time, stores, or discard the streams based on the definition of the sockets at the host device.

## Description

### TECHNICAL FIELD

The present invention relates to an information technique for transmitting information using a cable television network, more specifically, to one enabling to transmit content information such as still picture information, motion picture information , audio information, text information in accordance with TCP/IP (Transmission Control Protocol/Internet Protocol).

### BACKGROUND ART

A cable television broadcast system provides television broadcast services within a limited area using coaxial cables or optical fibers. Those television broadcast services include not only re-sending services of ground wave broadcast and CS/BS broadcast but also community broadcast services, and it is expected to provide subscribers with information related to the community within the area.

However, it is so costly to prepare contents for a television broadcast program that only programs having a lot of demand can be broadcast. Even with a cable television broadcast system, it is not easy to provide residents in the community with community-oriented and detailed information.

### DISCLOSURE OF THE INVENTION

In view of the foregoing, it is an object to easily provide residents in a community with information related to the community using a cable television network. Obviously, the present invention can be used for providing other information than one related to the community such as conventional television broadcast content as well.

Various aspects of the present invention attaining the above object are described in the attached claims.

According to the present invention, a subscriber side host device ( a first host device) is connected at a subscriber point to a LAN (Local Area Network) configured with a cable television broadcast system, and then receives content information transmitted from a second host device in a broadcast manner in accordance with TCP/IP. The contents information is a still picture, motion picture, audio, text, and /or the like information.

With this configuration, content information can be easily transmitted without using broadcast services provided by the cable television broadcast system.

The present invention can be implemented not only as a system or device, but also as a method. Obviously, a part of the present invention can be configured in computer software, It is also obvious that the technical scope of the present invention covers recording media which stores the computer software.

### BRIEF DESCRIPTION OF THE DRAWINGS

Fig. 1 illustrates a preferred embodiment of the present invention; and
Fig. 2 illustrates a graphical user interface used with a host device 101 at a subscriber site according to the embodiment.

### BEST MODE FOR CARRYING OUT THE INVENTION

An embodiment of the present invention will be described in the below.

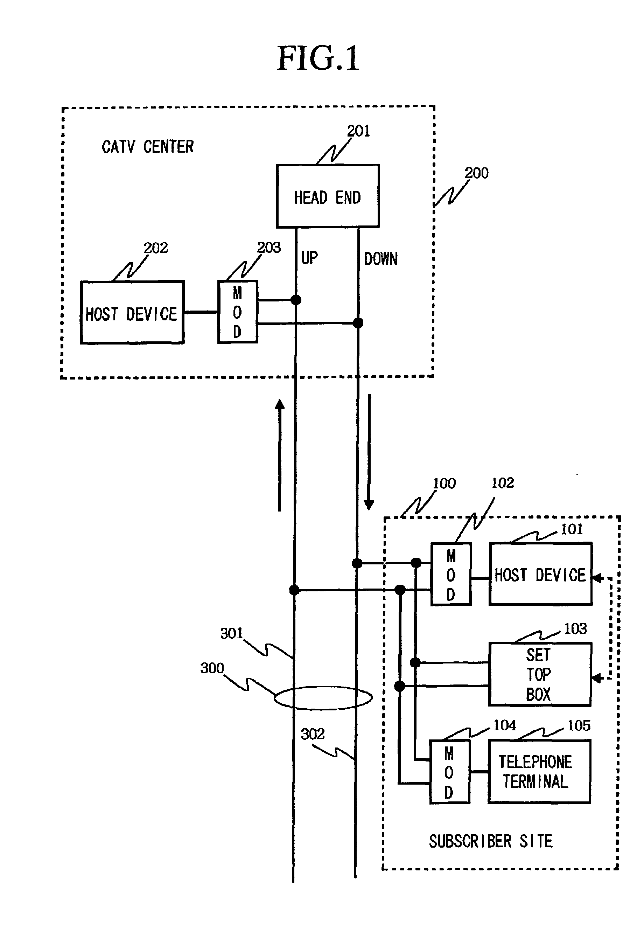

Fig.1 illustrates the overall configuration of a communications system according to the embodiment of the present invention, and in this figure, a subscriber site 100 and a CATV (Cable Television Broadcast) center 200 are connected to each other with a transmission path 300. The transmission path 300 can be composed by coaxial cables or optical fibers, and the node for distribution etc. be installed between those. The transmission path 300 consists of an upstream transmission path 301 and a downstream transmission path 302 which transmit data in a broadband using different frequency bands.

In the subscriber site 100, a host device 101, a cable modem 102, a set top box 103, a telephone modem 104, a telephone terminal 105, etc, are provided. In the CATV center 200, a head end 201, a content information providing host device 202, a cable modem 203, etc. are provided. The subscriber site 100 can be a conventional house for residence or an office building of a company or the like. While the figure shows only one subscriber site 100, usually a plurality of subscriber sites exist.

The subscriber site cable modem 102 and the center side cable modem 203 transmit and receive broadband LAN signals transferred over transmission path 300. The other edges of the cable modems 102, 203 are, for example, equipped with Ethernet interfaces. The signals transferred on the upstream transmission path 301 are turned by the head end 201 and are then transferred on the downstream transmission path 302.

The host devices 101 and 202 are connected to the broadband LAN configured with the transmission path 300 and the head end 201. As a result, the host devices 101 and 202 are placed within the network composed of the LAN etc. The host devices 101 and 102 ( usually NIC of those devices) are assigned with addresses ( private IP addresses or global IP addresses) of the network.

The host device at the center 200 transmits a plurality of content information streams with a broadcast address using a TCP/IP protocol. Moreover, the information streams are assigned with the respective destination port numbers. Those port numbers for example p1, p2, p3, ... , are related to channel numbers for example ch1, ch2, ch3, .... Those port numbers or channel numbers are used for identifying the streams or information programs. Each information stream can include at least one of still picture information, motion picture information, text information, audio information, etc. The transfer rate can adapted based on the content type of a stream.

The content information transferred in a broadcast manner from the host device 202 at the center 200 is distributed through the upstream transmission path 301, the head end 201, and the downstream transmission path 302 to the host device 101 at the subscriber site 100.

The subscriber side host device 101 receives using the TCP/Ip protocol each streams transferred in the broadcast manner. The host device 101 can define the selection of enabled sockets for receiving streams at a communications interface (Ethernet NIC). A stream having a broadcast address and a corresponding port number p1, p2, p3, or the like is sent to a corresponding socket and is subjected to packet (IP packet) discard or packet (IP packet) allowance based on the definition. Moreover, the allowed packets are sent to the application process which corresponds to the socket. The application process can be a type which displays information in real time, or which prints out the information, or which stores the information on an auxiliary storage device such as a hard disk, or of the like type.

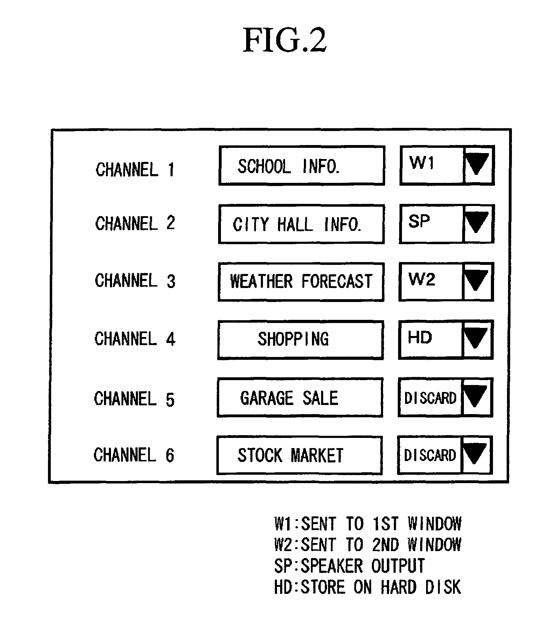

At the subscriber side host device 101, a graphical user interface such as shown in Fig.2 can be adopted for definition of channels ( sockets). In the example of Fig. 2, the channel ch1 is received in real time, and displayed in the first window. The channel ch2 is also received in real time and outputted to the speaker. The channel ch3 is also received in real time and displayed in another window. The channel ch4 is recorded on a hard disk (it is not outputted in real time. But it can be outputted in real time in another mode.) The channels ch5 and ch6 are disabled for receiving.

Moreover, the sockets can be allocated to a facsimile terminal, a telephone terminal, a printer, etc., and respective streams can be redirected to those systems or corresponding applications on the host device 101.

A part or the whole of the setting information can be sent through a network or read out from a recording card to set the selections.

Also, the destination port number of the stream from the office side host device 205 can be changed time by time, and correspondingly the setting information at the subscriber side host device 101 can be modified. And, the setting information can be charged.

Set top box 103 receives the broadcasting data transmitted through the downstream path 302 and then supplies the television signal to a television receiver (not shown in the figure) . Moreover, the telephone terminal 103 such as a conventional telephone terminal or a facsimile terminal is connected to the transmission path 300 through the telephone modem 104 for telephone services. Packet IDs each identifying to which terminal or broadcasting program the packet is related are used to direct the corresponding packets to the cable modem.

Moreover, while as described above the set top box 103 is arranged as separate from the host device 101, the host device 101 can be provided with a cable television receiving function ( application), and then a cable television receiving services can be provided using corresponding sockets at the host device 101. As shown in the dotted line, packets through the corresponding sockets can be redirected from the host device 101 to the set top box 103. In this case, the set top box 103 need not be connected directly with the transmission path 300. Alternatively, the set top box 103 can have the function of the host device 101 or the combination of the functions of the cable modem 102 and the host device 101.

The host device 101 can be configured with a personal computer, a set top box, or other various types of communications equipment. In other words, the host device can be a information processing device which can receive, using TCP/IP, information transferred in a broadcast manner.

In the embodiment described above, without television broadcast services, information can be provided to multiple subscribers through a cable television network using a broadcast technique. Moreover, the broadcast streams or channels can be selected using a socket technique.

The present invention is not confined with the details disclosed with the preferred embodiment, and various modifications in form or detail can be made without departing from the spirit and scope of the present invention. For instance, while the embodiment described above provides conventional cable television services, data for the cable television services can be transmitted in a broadcast manner using TCP/IP as described above. In this case, sockets can be assigned to respective broadcasting channels, or alternatively one socket can be assigned to the whole cable television services or to a group of the cable television services.

Moreover, the center side host device 202 can be placed away from the CATV center 200. It can be placed at a site of a producer who produces content to be transferred in a broadcast manner, or at a house of a predetermined subscriber.

Also, as described above, content information can be sent from a host device to various terminals including facsimile equipment and telephone equipment by redirect operations using sockets. A host can execute the corresponding applications to the functions of those terminals, and receives the corresponding data packets using sockets for the applications.

Also for services by a near VOD (Near Video On Demand) system, upon request to the system from a subscriber side host, the near VOD system can allocate a receiving port number to a VOD receiving application process on the host device for receiving data transferred in a broadcast manner using TCP/IP.

Also, using the IPv6 (Internet Protocol Version 6), a multicast technique provides one to multiple points transfer in various manners. The conventional broadcast in a network can be achieved by the multicast in the IPv6. Moreover, information can be sent to a lot of addresses over plural networks, and information transmitted from one host can be transferred in a broadcast manner within each of the plural network (Of course, IPv6 routers etc. are necessary). In this invention, it is important that the same stream is transferred in a broadcast manner within one network, and both of the conventional broadcast technique and the multicast technique of the IPv6 can be utilized.

### INDUSTRIAL APPLICABILITY OF THE INVENTION

As described above, according to he present invention, information can be transferred from one point to multiple points using a cable television network in a simple manner which is different from conventional television broadcast services. Moreover, plural streams can be selected with sockets.

## Claims

1. A transmission system transmitting content information using a transmission path of a cable television network, comprising:
a first host device connected to a downstream path at a subscriber point for receiving content information transferred on the downstream path in a broadcast manner in accordance with a TCP/IP protocol; and
a second host device connected to an upstream path for transferring content information on the upstream path in a broadcast manner in accordance with the TCP/IP protocol.

2. A transmission system comprising:
a host device connected to a broadband LAN configured with a cable television network at a subscriber point for receiving content information transferred on the LAN in a broadcast manner in accordance with a TCP/IP protocol; and
a second host device connected to the LAN for transferring content information on the LAN in a broadcast manner in accordance to the TCP/IP protocol.

3. The transmission system of claim 1, wherein the content information is distributed to the first host device using a broadcast address.

4. The transmission system of claim 3, wherein the content information is distributed as plural streams, each of the streams being separately received using corresponding sockets.

5. The transmission system of claim 4, wherein the sockets are defined with the broadcast address and destination port numbers of the content information.

6. The transmission system of claim 4, wherein the first host device has means for setting one of a first mode for outputting a received stream in real time, a second mode for storing a received stream in such a manner that the stored stream can be read out in response to a predetermined event, and a third mode for discarding a received stream, for each of the sockets.

7. The transmission system of claim 1, wherein the content information include at least one of still picture information, motion picture information, text information and audio information.

8. The transmission system of claim 2, wherein the content information include at least one of still picture information, motion picture information, text information and audio information.

9. A subscriber host device connected at a subscriber point to a broadband LAN configured with a cable television network for receiving a plurality of streams of content information transferred through the LAN in a broadcast manner, the streams being associated with respective sockets, wherein the streams are selectively received using the sockets.

10. The subscriber host device of claim 9, wherein the sockets are defined with TCP/IP port numbers.

11. A transmission system comprising a host device connected to a broadband LAN configured with a cable television network for transferring content information in a broadcast manner in accordance with a TCP/IP protocol.

12. The transmission system of claim 11, wherein the content information is transferred as a plurality of streams, the streams being assigned with respective destination port numbers of the TCP/IP protocol.

13. In a subscriber host device connected to a broadband LAN configured with a cable television network at a subscriber point for receiving content information transferred through the LAN in a broadcast manner, the streams being associated with respective sockets, the subscriber host device streams of the content information using corresponding sockets.

14. The subscriber host device of claim 13, wherein the sockets are related with the streams using port numbers of TCP/IP.
